# EUROPÄISCHE PATENTSCHRIFT

(11) **EP 0 485 693 B1**
(45) Veröffentlichungstag und Bekanntmachung des Hinweises auf die Patenterteilung: **21.12.1994**
(21) Anmeldenummer: 91111793.5
(22) Anmeldetag: 15.07.1991
(51) Int. Cl.: F16J 15/12, F16J 15/06

(54) **Zylinderkopfdichtung und Verfahren zu ihrer Herstellung**
Cylinder-head gasket and manufacturing method
Garniture d'étanchéité pour culasses et procédé de fabrication

(30) Priorität: 15.11.1990 DE 4036439; 11.04.1991 DE 4111791; 14.11.1990 DE 4036255
(43) Veröffentlichungstag der Anmeldung: 20.05.1992
(73) Patentinhaber: Stecher, Friedhelm, D-51371 Leverkusen (DE)
(72) Erfinder: Stecher, Friedhelm, D-51371 Leverkusen (DE); Friedrichs, Gerd, K., D-51381 Leverkusen (DE)
(74) Vertreter: Weber, Otto Ernst, Dipl.-Phys.

(56) Entgegenhaltungen:
- EP-A- 0 079 263
- EP-A- 0 230 804
- US-A- 3 740 062
- PATENT ABSTRACTS OF JAPAN vol. 9, no. 92 (M-373)(1815) 20. April 1985 & JP-A-59 217 060 (ASAHI ISHIWATA) 7. Dezember 1984

## Beschreibung

Die Erfindung betrifft eine Zylinderkopfdichtung, sowie ein Verfahren zu ihrer Herstellung.

Flachdichtungen, insbesondere Zylinderkopfdichtungen, benötigen an der Dichtstelle eine bestimmte Flächenpressung, damit sie ihre Funktion erfüllen können. Bei größeren Dichtflächen, wie zwischen einem Zylinderkopf und einem Zylinderblock von Verbrennungsmotoren, wird diese Flächenpressung mit Hilfe von Schrauben erzeugt, wobei die Kräfte gezielt über die Fläche verteilt werden müssen.

Bei Erreichen einer ausreichenden Anpreßkraft bzw. Abdichtkraft zwischen zwei Schrauben auf die Dichtung entsteht eine bestimmte Durchbiegung der abzudichtenden Flächen. Um trotz dieser unterschiedlichen Durchbiegungen der sich gegenüberliegenden Dichtflächen eine Dichtwirkung zu erzielen, werden üblicherweise sogenannte Weichstoffdichtungen eingesetzt. Diese werden beim Einbau dickenverformt, so daß eine die Funktion gewährleistende Pressungsverteilung entsteht.

Aus der DE-A 19 23 482 ist eine Zylinderkopfdichtung der folgenden Gattung bekannt. Im nicht eingebauten Zustand sind um die Brennraumöffnungen konzentrisch zu diesen ringförmige Dichtkämme, die aus der Dichtungsebene hervortreten, und abwechselnd dazu Vertiefungen in der Dichtebene vorhanden. Die Höhe der Dichtkämme ist den Schraubenabständen angepaßt. Durch diese Maßnahme wird erreicht, daß nach dem Einbau zwischen die Dichtflächen, d.h. nach dem Verspannen der Dichtung, infolge der auf die Dichtkämme einwirkenden erhöhten Flächenpressung ein Werkstofffluß von den Dichtkämmen auf die Vertiefungen eintritt, wobei der nahezu vollständig rückzuverformende Dichtkamm sich der genauen Kontur der durch Verzug niemals exakt ebenen Dichtfläche anpaßt. Es besteht aber hierbei die Gefahr, daß durch diese Kämme die Dichtflächen beschädigt werden.

Außerdem ist in der DE-A1-39 22 284 eine Zylinderkopfdichtung im wesentlichen aus Weichmaterial beschrieben, bei welcher mindestens zwei nebeneinanderliegende und durch einen Steg getrennte Durchtrittsöffnungen vorhanden sind. Das Weichstoffmaterial ist an den Rändern der Durchtrittsöffnungen mit metallischen, ringförmigen, im Querschnitt U-förmigen Brennraumeinfassungen versehen. Auf den Steg ist eine metallische Verstärkung aufgelegt, die zumindest auf einer Seite mit einer vorgegebenen Wölbung zum Ausgleich der Durchbiegung der Dichtflächen versehen ist. Eine genaue, individuelle Anpassung der Wölbung der Verstärkungseinlage an die Durchbiegungslinie der Dichtfläche erfolgt nicht.

Des weiteren ist aus der DE-A1-22 28 155 für Weichstoff-Flachdichtungen bekannt, auf den Steg zwischen zwei Durchtrittsöffnungen Blechplättchen zur Querschnittsanpassung zu legen. Man erreicht hier jedoch nur eine sehr grobe Anpassung an die Form der abzudichtenden Flächen,da die Querschnittsveränderung in relativ großen Stufen erfolgt. Besonders nachteilig an dieser stufenweisen Dickenanpassung ist, daß sie nicht längs einer geschlossenen Dichtlinie ohne Leckstelle möglich ist.

Bei diesen Weichstoffdichtungen wird als nachteilig angesehen, daß sie zunächst im Einbauzustand unter den gleichen Schraubenkräften verformt werden, unter welchen sie anschließend im Betriebszustand möglichst ohne jede weitere Verformung "standfest" arbeiten sollen. Ein weiterer Nachteil ist die recht aufwendige Konstruktion der Dichtung ausschließlich für den Zweck, die erforderliche Flächenpressungsverteilung durch eine dem Motor entsprechende Dickenverteilung über die Fläche während der Einbauphase zu erreichen.

Ein zusätzliches Problem stellt die genaue Einhaltung der Einbaudicke dar, weil der Weichstoff in der Dicke relativ stark schwankt und diese noch zusätzlich von der Verformungsfähigkeit des Dichtungsmaterials sowie von der Höhe der Schraubenkräfte abhängt. Problematisch ist außerdem, daß ein großer Anteil der Materialkomponenten einer Weichstoffdichtung nicht recyclingfähig ist.

Darüberhinaus sind auch metallische Flachdichtungen seit langer Zeit im Einsatz, die aus einem relativ weichen Metall bestehen. Hierbei ist als nachteilig anzusehen, daß die örtlichen Verformungen zum Erzielen einer geringeren Dicke höhere Kräfte beim Einbau erfordern und dadurch keine gezielte Flächenpressung erlauben. Beim Einbau kann man solche Dichtungen gerade nicht an den gewünschten Stellen mit der erforderlichen Flächenpressung beaufschlagen. Mit während des Einbaus verformbaren metallischen Dichtungen läßt siche keine gezielte Flächenpressung erreichen. Derartige Dichtungen können daher ausschließlich in Fällen eingesetzt werden, in welchen hohe Schraubenkräfte zur Verfügung stehen. Umgekehrt schließt das den Einsatz für Leichtbaukonstruktionen aus.

Zusätzlich werden metallische Dichtungen vielfach mit sogenannten Sicken versehen, die während des Einbaues höhenverformt werden und der Dichtung dadurch örtlich eine verserte Anpassung verleihen sollen. Dies hat wiederum den Nachteil, daß an den Stellen mit größerer Einbaudicke nur die Sicke trägt, die aber durch thermische Bauteilverformung wie eine Weichstoffdichtung im Betrieb weiter verformt werden kann.

Beispielsweise ist aus der EP-A-0 230 804 eine elastische Mehrlagen-Zylinderkopfdichtung aus mehreren Metallplatten bekannt, die mit einer Sicke versehen ist. Um die dynamische Belastung der Sicke der Dichtung zu vermindern, sind um die Brennkammern Stützringe an der Dichtung angebracht. Die Dicke der Stützringe verändert sich in Umfangsrichtung abhängig vom Abstand der Schraubenlöcher und ist in radialer Richtung jedoch konstant. Neben der aufwendigen Herstellung aus mehreren Metallteilen besteht der Nachteil dieser Dichtung darin, daß durch die Sicke und die Stützringe mehrere Totzonen in der Dichtung gebildet werden. Weiterhin sind bei dieser elastischen Dichtung die abzudichtenden Bauteile und die Schrauben relativ starken dynamischen Belastungen ausgesetzt.

Des weiteren wird in der JP-A-59 217 060, welcher als nächstliegender Stand der Technik anzusehen ist, ein Verfahren zum Herstellen von Flanschdichtungen aus einer Asbest/Gummi-Mischung beschrieben. Hierbei wird ein Dichtungsmuster mit Bleikugeln präpariert und in eine Flanschverbindung eingebaut, Nach Herausnahme des deformierten Dichtungsmusters wird die Verformung des Bleikugeln gemessen, um eine des Dichtungsdeformierung entsprechende Pressform zu erzeugen, mit welches Schließlich eine Dichtung hergestellt wird, die des Deformierung der ursprünglichen Dichtungsmusters entspricht, derart daß eine in wesentlichen gleichmäßige Pressungsverteilung entsteht. Man enthält keinen Hinweis, daß und wie Betriebsbedingungen bei diesem Herstellungsverfahren berücksichtigt werden können.

Der Erfindung liegt die **Aufgabe** zugrunde, eine Zylinderkopfdichtung der eingangs genannten Art sowie ein Herstellungsverfahren hierzu anzugeben, bei welcher die Dichtwirkung bei gleichzeitiger Erhöhung der Standfestigkeit verbessert ist.

Diese Aufgabe wird für die Zylinderkopfdichtung gemäß Anspruch 1 und verfahrensmäßig nach Anspruch 8 gelöst.

Bevorzugte Weiterbildungen der Erfindung sind in den abhängigen Ansprüchen beschrieben.

Eine bevorzugte Weiterbildung des Herstellungsverfahrens weist folgende Verfahrensschritte auf:
a) Herstellen eines Einbaumusters in der Weise, daß ein plastisch verformbarer Werkstoff zwischen die abzudichtenden Flächen eingespannt wird, und
b) Kopieren der Topographie des Einbaumusters.

Ein Grundgedanke der Erfindung ist darin zu sehen, daß im Gegensatz zu den bekannten Dichtungen, die trotz teilweiser topographischer Dickenverformung beim Einbau einer plastischen Verformung bedürfen, bereits bei der Herstellung die für den Anwendungsfall richtige Dickenverteilung erzeugt wird. Die erfindungsgemäße Dichtung weist demgegenüber zumindest an allen tragenden Stellen die vollständige für die notwendige Pressungsverteilung erforderliche Topographie bereits vor dem Einbau auf. Aufgrund des gewählten nicht dickenverformbaren Werkstoffs werden die Schraubenkräfte gezielt auf die tragenden und damit abzudichtenden Flächen verteilt. Da die Dichtung erfindungsgemäß absolut standfest ausgeführt ist, kann sie mit viel größeren Verformungskräften hergestellt werden, als sie im späteren Einbauzustand auftreten. Eine einmal als optimal festgestellte Dickenverteilung wird auch bei örtlichen betriebsbedingten Änderungen beibehalten. Pressungsveränderungen führen deshalb nicht zu irreversiblen Verformungen, sondern zu reversiblen Pressungsveränderungen. Auf diese Weise erreicht man eine dauerhaft optimale Dichtungswirkung.

Ein weiterer Grundgedanke der Erfindung besteht darin, daß die Topographie unter Betriebsbedingungen experimentell z.B. unter Verwendung eines Einbaumusters ermittelt wird und daß dieses - gegebenenfalls nach Umrechnung - als Kopiervorlage dient. Im Beispiel von Verbrennungsmotoren wird für einen bestimmten Motor ein - gegebenenfalls errechneter - "Positiv - Abdruck" im Maßstab 1:1 hergestellt, welcher zwangsläufig genau den abzudichtenden Raum zwischen dem Zylinderkopf und dem Motorblock einnimmt.

Bei Versuchen hat es sich als ausreichend herausgestellt, daß ein einziges Einbaumuster, beispielsweise für eine bestimmte Motorbaureihe, hergestellt wird, und daß anhand dieses Einbaumusters Dichtungen für diese Motorbaureihe in großer Anzahl mit ausreichender Präzision hergestellt werden können.

Die Erfindung hat ferner den Vorteil, daß die Recyclingfähigkeit sowohl der bei der Fertigung entstehenden Abfälle als auch der Dichtung selbst unproblematisch ist, da im wesentlichen nur ein Werkstoff und nicht eine untrennbare Kombination verschiedener Stoffe verwendet wird.

Ein wesentlicher Vorteil ist darin zu sehen, daß die Schraubenkräfte verringert werden können. Die Flächenpressung muß im Gegensatz zum Stand der Technik, wo sie im Bereich der Schrauben deutlich höher liegt als in den dazwischenliegenden Bereichen, über die gesamte Dichtfläche zur Abdichtung eines Mediums im wesentlichen gleich sein. Die Dichtflächen zur Abdichtung von Verbrennungsgasen sollen eine deutlich höhere Flächenpressung als die Dichtflächen von beispielsweise Wasser haben. Es können daher auch schwächere Schrauben für die Verbindung von Zylinderkopf und Zylinderblock verwendet werden, weil nur die wirklich notwendige Flächenpressung erzeugt werden muß.

Die Zylinderkopfdichtung besteht aus einem Werkstoff, der unter dem Anpreßdruck im Einbauzustand druckfest und nicht dickenverformbar ist. Es erweist sich als zweckmäßig, daß die Fließgrenze des Dichtungswerkstoffes deutlich oberhalb der im Betrieb auftretenden spezifischen Belastung liegt.

Als Werkstoff sind gut geeignet Stahl, Aluminium oder eine Legierung hiervon, Kunststoff oder eine Mischung aus Metall und Kunststoffgranulat.

Es erweist sich als besonders vorteilhaft, daß die Flachdichtung eine kontinuierliche Dickenverteilung aufweist. Das hat den Vorteil, daß man eine verbesserte Auflage der Dichtflächen erhält. Insbesondere vermeidet man dadurch einen Zylinderverzug bzw. einen Verzug des Randes der Brennraumdurchtrittsöffnungen. Beim Stand der Technik entstehen diese Verformungen aufgrund eines Drehmoments um die Schrauben/Gewindelöcher. Der hierbei überstehende Bereich wirkt als Hebel, mit welchem er über den Rand der Durchtrittsöffnungen auf den darunterliegenden Zylinderrand preßt.

Eine bevorzugte Weiterbildung der Erfindung besteht darin, daß die nichttragenden und somit nicht abdichtenden Flächenbereiche in der Dicke stufenweise einseitig oder beidseitig gegenüber den tragenden Flächen abgesetzt sind. Das hat den Vorteil, daß eine weitere gezielte Verteilung und somit Verringerung der Schraubenkräfte auf die Dichtungsflächen möglich ist.

Zum Ausgleich von Oberflächenrauheiten der abzudichtenden Flächen kann es zweckmäßig sein, daß die dreidimensionale Dichtfläche innerhalb der tragenden Bereiche zumindest teilweise mit einer im Mikrobereich druckverformbaren Schicht versehen ist. Das hat den Vorteil, daß ein Rauhtiefenausgleich, beispielsweise durch eine Lackbeschichtung, erfolgt, wobei der Kontakt zum formfesten Dichtungsmaterial erhalten bleibt.

Es ist vorteilhaft, daß die zur Durchbiegung der abzudichtenden Flächen komplementären dreidimensionalen Dichtflächen auf gegenüberliegenden Seiten ausgeformt sind, wobei gegenüberliegende Dichtflächen bevorzugt ungleich bezüglich Ausdehnung und/oder Form sind.

Eine bevorzugte Weiterbildung des Herstellungsverfahrens besteht darin, daß beim Kopieren unter Berücksichtigung von motorspezifischen und/oder unterschiedlichen Betriebszuständen Veränderungen der Topographie vorgenommen werden.

Man kann die Topographie auf diese Weise erforderlichenfalls korrigieren oder vorgegebene Bereiche gezielt be- oder entlasten. Beispielsweise werden bei der Herstellung eines Einbaumusters die Stege zwischen zwei Brennraumdurchtrittsöffnungen geringer belastet als die vergleichbaren Außenränder. Entsprechend weist das Einbaumuster in diesen Außenbereichen eine geringere Dicke auf. Andererseits hat dies einen unerwünschten Verzug des Zylinderkopfes zur Folge. Korrigiert man diese unerwünschten Verformungen beim Kopieren, so hat dies den Vorteil, daß der Zylinderkopf nicht so stark verzogen wird.

Es kann hierbei besonders vorteilhaft sein, daß die Dickenverteilung in vorgegebenen Dichtungsbereichen beim Kopiervorgang in der Weise hergestellt wird, daß die Dichtung zwar druckentlastet ist, aber dennoch eine großflächige Berührung der Dichtflächen im Einbauzustand vorhanden ist. Das heißt mit anderen Worten, daß die Dichtung in diesen Bereichen den durch die Durchbiegung der abzudichtenden Flächen vorhandenen Hohlraum ohne Totzone ausfüllt, wobei die Pressung gezielt zurückgenommen oder vollständig aufgehoben ist. Bevorzugt erfolgt dies entlang der Brennraumdurchtrittsöffnungen.

Eine andere bevorzugte Weiterbildung des Herstellungsverfahrens besteht darin, daß der Kopiervorgang folgende Verfahrensschritte umfaßt:
c) Abtasten des Einbaumusters mit einem Dickenmeßgerät und Abspeichern der Meßdaten in einer Datenverarbeitungseinrichtung,
d) Erstellen der Topographie in der Datenverarbeitungseinrichtung aufgrund der Meßwerte - gegebenenfalls unter Verrechnung mit motorspezifischen Parametern, und
e) Herstellung eines Formungswerkzeugs mit einer Negativform der Zylinderkopfdichtungs mittels eines werkstoffabhebenden Verfahrens unter Steuerung der Datenverarbeitungseinrichtung.

Als Formungswerkzeug eignet sich besonders ein Prägewerkzeug oder eine Gießform.

Es kann ferner zweckmäßig sein, daß das Einbaumuster unter unterschiedlichen Betriebszuständen der abzudichtenden Flächen hergestellt, ausgewertet und die ermittelten Meßdaten zum Erstellen einer Topographie miteinander verrechnet werden, um diese unter Berücksichtigung der unterschiedlichen Betriebszustände optimal anzupassen.

Die Standfestigkeit wird dadurch optimiert, daß die Flachdichtung bei der Herstellung mit Verformungskräften geprägt wird, die größer sind als die im Betrieb auftretenden Anpreßdrucke.

Zusätzlich oder alternativ zu den vorstehenden Verfahrensschritten kann es auch vorteilhaft sein, daß das Ausgangsmaterial beispielsweise thermisch oder chemisch in einen Zustand der leichten Verformbarkeit versetzt und das Material nach der Ausformung gehärtet wird.

Eine andere bevorzugte Weiterbildung des Herstellungsverfahrens besteht darin, daß in einem plattenförmigen Ausgangsmaterial zunächst örtlich unterschiedlich durch Einprägen und gleichzeitigem Herauswachsen einer vorgegebenen Topographie eine im Vergleich zur späteren Dickenverteilung umgekehrte Hülldickenverteilung erreicht wird, daß anschließend durch ein abtragendes Arbeitsverfahren eine gleichmäßige Dicke hergestellt wird, und daß schließlich die endgültige Form ohne seitliches Fließen des Materials eingedrückt wird.

Es erweist sich ferner als zweckmäßig, daß die zur Abdichtung bestimmten tragenden Flächenbereiche durch unmittelbar benachbarte eingeprägte Vertiefungen aus einer ursprünglich gleichmäßig dicken Ausgangsplatte hervorgehoben werden.

Die Dichtung kann mit besonders wenigen Arbeitsschritten dadurch hergestellt werden, daß die hervortretenden tragenden Flächenbereiche die endgültige Dickenverteilung bereits bei der Prägung der benachbarten Vertiefungen durch eine Materialverschiebung erhalten.

Für eine optimale Anpassung ist es gemäß einer weiteren Ausgestaltung vorgesehen, daß die hervorgehobenen tragenden Flächenbereiche mindestens die maximal vorgesehene Dicke, bevorzugt durch Materialverschiebung bei gleichzeitiger Prägung der Vertiefungen erhalten und die endgültige Dikkenverteilung in einem anschließenden Prägeschritt hergestellt wird.

Es erweist sich als vorteilhaft, daß eine Erhebung durch eine Einprägung auf benachbarten Seiten hergestellt wird.

Ferner kann es vorteilhaft sein, daß die Einprägungen in Bereichen vorgenommen werden, welche in einem nachfolgenden Verfahrensschritt zur Erzeugung von Öffnungen ausgestanzt werden.

Nachfolgend wird die Erfindung anhand von in der Zeichnung dargestellten Ausführungsbeispielen weiterbeschrieben.
- Fig. 1: zeigt schematisch eine Teil-Draufsicht auf eine Zylinderkopfdichtung;
- Fig. 2: zeigt schematisch einen Vertikal-Querschnitt durch die Zylinderkopfdichtung gemäß Fig. 1 entlang der Schnittlinie II-II;
- Fig. 3: zeigt schematisch einen Vertikal-Querschnitt durch die Zylinderkopfdichtung gemäß Fig. 1 entlang einer Schnittlinie III-III;
- Fig. 4: zeigt schematisch einen Vertikal-Querschnitt durch die Zylinderkopfdichtung gemäß Fig. 1 entlang der Schnittlinie IV-IV; und
- Fig. 5: zeigt schematisch einen Vertikal-Querschnitt entsprechend einer Schnittlinie IV-IV gemäß Fig. 1 einer weiteren Zylinderkopfdichtung.

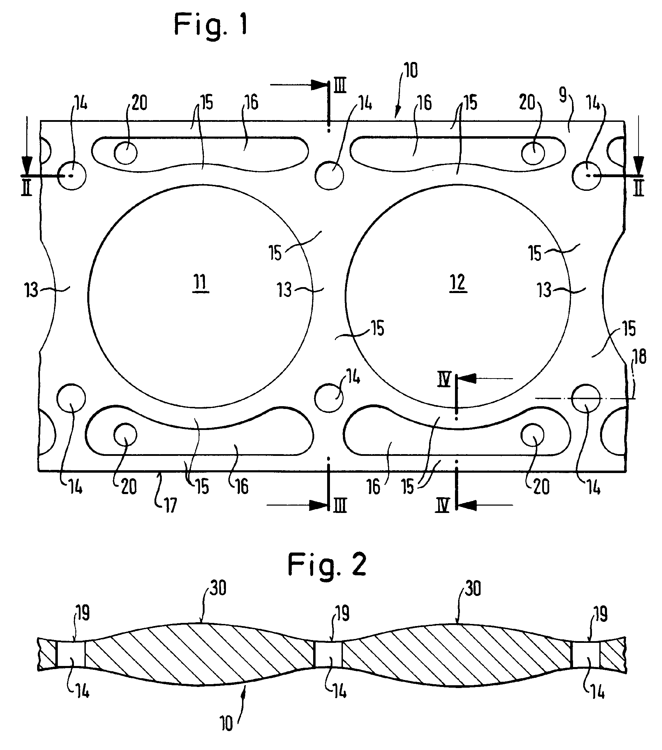

Die in Fig. 1 veranschaulichte Zylinderkopfdichtung 10 besteht aus einer Dichtungsplatte 11 aus einem Werkstoff, der im Einbauzustand und unter Betriebsbedingungen druckfest und nicht dickenverformbar ist, beispielsweise Aluminium oder hitzebeständigem Kunststoff. Sie weist auf der Ober- und Unterseite aus der Zeichenebene heraustretende topographische Oberflächen auf, die nachfolgend noch näher beschrieben werden. Der abgebildete Abschnitt der Dichtungsplatte 11 ist mit zwei nebeneinanderliegenden Brennraumdurchtrittsöffnungen 11,12 versehen, zwischen welchen ein Steg 13 verläuft. Ferner sind Öffnungen 14 vorhanden, welche im eingebauten Zustand zwischen einem Zylinderkopf und einem Zylinderblock eines Verbrennungsmotors (nicht dargestellt) die Schrauben aufnehmen, mit welchen die Dichtflächen verpreßt werden.

Die Zylinderkopfdichtung hat tragende und somit abdichtende Bereiche 15 sowie in diesen inselartig verteilte nicht tragende Bereiche 16. Die Verteilung der tragenden und nicht tragenden Bereiche 15,16 wird durch die Verteilung der Brennraumdurchtrittsöffnungen 11,12, der nicht tragenden Bereiche 16 mit Öffnungen 20 und der Schraubenöffnungen 14 bestimmt. Tragende Bereiche 15 sind in jedem Fall ununterbrochen um die Brennraumdurchtrittsöffnungen 11,12 herum und ferner entlang den Plattenrändern vorhanden. Die nichttragenden Bereiche 16 liegen zwischen den randseitigen tragenden Bereichen 15 und einer (gedachten) Linie 18, die parallel zu den Plattenrändern durch die Mittelpunkte der diesem Plattenrand zugeordneten Schraubenöffnungen 14 verläuft.

In den nichttragenden Bereichen 16 sind die Öffnungen 20 für Wasser- und Ölableitungen oder ähnliches ausgestanzt.

Der Vertikalquerschnitt entlang der Schnittlinie II-II gemäß Fig. 2 zeigt die Topographie der Zylinderkopfdichtung 10 parallel zu den Plattenrändern in einer der Linien 18 in einem tragenden Bereich 15. Die Dickenverteilung ist bereits vor dem Einbau in der Weise bleibend vorgegeben, daß der Oberflächenverlauf im Hinblick auf die im eingebauten Zustand notwendige Pressungsverteilung ausgeformt ist. Entsprechend ist im Bereich der Schraubenöffnungen 14 die geringste Dicke vorhanden. Von diesem Tiefpunkt 19 steigt die Dicke kontinuierlich bis zu einem Maximum 30 in der Mitte zwischen zwei Schraubenöffnungen 14 an. Diese Kurve entspricht im wesentlichen der Biegelinie eines Zylinderkopfes im verschraubten Zustand. Die unveränderbar fest vorgegebene Einbaudicke ist somit genau auf den bei der Verschraubung von Zylinderkopf und Zylinderblock entstehenden Hohlraum hin ausgeformt. Im vorliegenden Beispiel sind die Topographien der Ober- und Unterseite unterschiedlich.

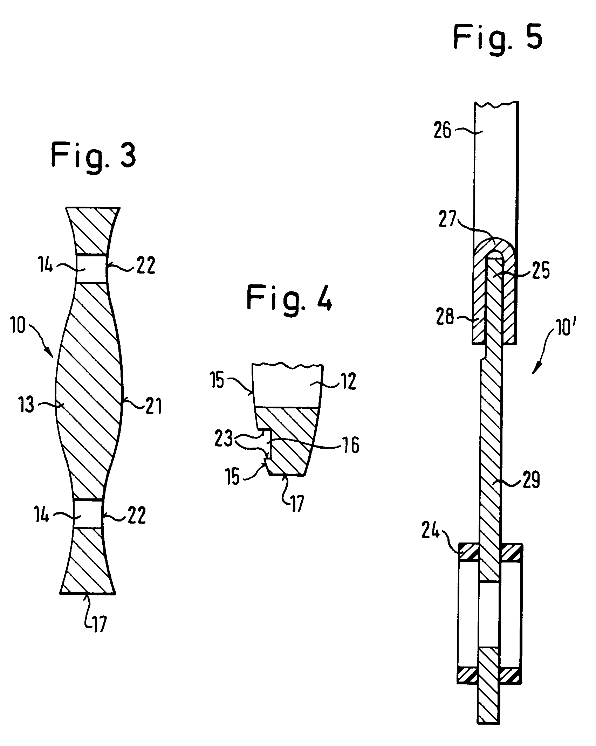

Der Vertikalschnitt gemäß Schnittlinie III-III in Fig. 3, der quer durch den Steg 13 und zwei Schraubenöffnungen 14 verläuft, zeigt, daß die Zylinderkopfdichtung 10 auch in Querrichtung bereits vor dem Einbau bleibend topographisch ausgeformt ist. Die Oberflächenlinie hat ein Maximum 21 in der Mitte zwischen den Schraubenöffnungen 14 und Minima im Bereich der Schraubenöffnungen 14. Zu den Plattenrändern 17 hin nimmt die Dicke wieder kontinuierlich zu. Der auch im übrigen kontinuierliche Verlauf der Oberflächenverformung entspricht wiederum im wesentlichen der entsprechenden Biegungslinie des zugehörigen Zylinderkopfes und den Verformungen der Blockdichtfläche im eingebauten Zustand.

Fig. 4 zeigt anhand der Schnittlinie IV-IV, daß die nichttragenden Bereiche 16 unter Bildung von Stufen 23 von der ansonsten kontinuierlich verlaufenden Oberfläche der tragenden Bereiche 15 abgesenkt sind.

Fig. 5 zeigt anhand eines weiteren Beispiels einer Zylinderkopfdichtung 10′ eine Kombination aus Bereichen 25 mit einer bleibend vorgegebenen Dickenverteilung in besonders hoch auf Druck belasteten Bereichen und einer elastomeren Abdichtung 24. In dem dargestellten Beispiel, welches einem Horizontalquerschnitt entlang einer Schnittlinie IV-IV gemäß Fig. 1 entspricht, handelt es sich bei dem mit hohem Druck belasteten Bereich 25 um den Randbereich einer Brennraumdurchtrittsöffnung 26. Dieser Bereich 25 ist hier mit einem metallischen Bördel 27 mit U-förmigem Querschnitt bewehrt. Da die Dickenverteilung dieses Randbereichs 25 unveränderbar fest vorgegeben ist, wird auch der Bördel 27 spätestens beim Verschrauben der Dichtung entsprechend verformt, so daß auch der entsprechende Schenkel 28 des Bördels 27 eine passgenaue Topographie aufweist. Der Bördel dient im vorliegenden Beispiel im wesentlichen als Hitzeschutz, während die Dickenverteilung durch den eingefaßten Rand vorgegeben wird.

Im übrigen Flächenbereich 29 ist die Dichtung 10′ dünner als am bewehrten Dichtungsrand. Die elastomere Abdichtung 24 dient zum Abdichten von Wasser- und Ölableitungen oder ähnlichem.

Unter Bezugnahme auf die Figuren 1 bis 4 wird nachfolgend ein Herstellungsverfahren für die Zylinderkopfdichtung 10 beispielhaft beschrieben. Ein verformbares Einbaumuster wird zwischen einen Zylinderkopf und einen Zylinderblock (nicht dargestellt) gelegt und es werden dann der Zylinderkopf und Zylinderblock in der üblichen Weise miteinander verschraubt. Auf diese Weise wird ein Positiv-Abdruck der herzustellenden Dichtung hergestellt. Gegebenenfalls kann der Motor auch nach einem vorgegebenen Programm betrieben werden, bevor man das Einbaumuster entnimmt.

Anschließend wird das Einbaumuster mit einem Dickenmeßgerät abgetastet, um die Topographie zu ermitteln. Die Meßdaten werden in einer Datenverarbeitungsanlage abgespeichert. Die Abtastung erfolgt im Bereich der Brennraumdurchgänge bevorzugt radial und im Bereich der Restfläche bevorzugt kartesisch. Außerdem legt man eine bestimmte Vorlast an, um eventuelle Ablösungen im Material zu eliminieren.

Die ermittelten Meßwerte werden mit motorspezifischen Daten verrechnet. Dies bedeutet, daß unter Berücksichtigung von Betriebs- und Materialparamatern des Motors Meßwerte, die innerhalb vorgegebener Bereiche innerhalb der Dichtungsfläche ermittelt wurden, mit einem vorgegebenen Zuschlag oder Abschlag beaufschlagt werden.

Aufgrund dieser gegebenenfalls modifizierten Meßdaten wird unter Zuhilfenahme von Computer Aided Design (CAD) eine Topographie der Dichtung erstellt. Die Topographie ist komplementär zur Form der zugehörigen, abzudichtenden Fläche.

Diese Topographie-Daten dienen anschließend zur Ansteuerung eines materialabhebenden Werkzeugs, mit welchem eine Negativform der Dichtung hergestellt wird. Als Werkzeug eignet sich insbesondere eine CNC-gesteuerte Fräse oder eine Erodier-Elektrode.

Bei der Ansteuerung des Werkzeugs wird darauf geachtet, daß kontinuierliche Höhenübergänge hergestellt werden.

Anhand der Negativform wird durch Pressen oder Gießen eine Rohform der Zylinderkopfdichtung hergestellt. Alle Brennraumöffnungen 11,12 sowie die Öffnungen 20 für Wasser- und Ölableitungen und gegebenenfalls für die mechanische Entlastung werden nach der Herstellung der Rohform ausgestanzt.

Es kann sich eine Oberflächennachbehandlung anschließen. Für den Fall, daß Mikrodichteigenschaften erforderlich sind, wird die Dichtung noch mit Kunststoff oder Lack beschichtet.

## Patentansprüche

1. Zylinderkopfdichtung, bei welcher zumindest einseitig und zumindest an jeder im Einsatzfall tragenden Stelle (15) vor dem Einbau eine der Topographie des Raumes zwischen den abzudichtenden Flächen entsprechende dreidimensionale, sprungfreie Dichtfläche in der Weise bleibend ausgeformt ist, daß die Dichtfläche einstückig mit einer Dichtungsplatte (11) ausgeformt und aus einem Werkstoff ist, dessen Fließgrenze höher ist als die maximale im Betrieb auftretende spezifische Belastung, so daß sie unter dem Anpressdruck im Einbauzustand druckfest und nicht dikkenverformbar ist, und bei welcher die Dickenverteilung der dreidimensionalen Dichtfläche gezielt so ausgebildet ist, daß die Flächenpressung über die gesamte Dichtfläche für jeweils ein abzudichtendes Medium unter Betriebsbedingungen gleich ist, so daß im Einsatz eine gezielte Verteilung von Schraubenkräften auf die Dichtfläche erfolgt.

2. Zylinderkopfdichtung nach Anspruch 1,
dadurch **gekennzeichnet,**
daß die Dickenverteilung der dreidimensionalen Dichtflächen für unterschiedliche Medien, beispielsweise Verbrennungsgase und Wasser, jeweils so ausgebildet sind, daß unterschiedliche Flächenpressungen im Einsatzfall vorhanden sind.

3. Zylinderkopfdichtung nach Anspruch 1 oder 2,
dadurch **gekennzeichnet,**
daß sie eine kontinuierliche Dickenverteilung aufweist.

4. Zylinderkopfdichtung nach einem der vorhergehenden Ansprüche,
dadurch **gekennzeichnet,**
daß die nichttragenden Flächenbereiche (16) gegenüber den tragenden Bereichen (15) abgesenkt sind.

5. Zylinderkopfdichtung nach einem der vorhergehenden Ansprüche,
dadurch **gekennzeichnet,**
daß die dreidimensionale Dichtfläche innerhalb der tragenden Bereiche (15) zumindest teilweise mit einer im Mikrobereich druckverformbaren Schicht versehen ist.

6. Zylinderkopfdichtung nach Anspruch 5,
dadurch **gekennzeichnet**,
daß die gegenüberliegenden Dichtflächen ungleich sind.

7. Zylinderkopfdichtung nach einem der vorhergehenden Ansprüche,
dadurch **gekennzeichnet**,
daß sie aus Stahl, Aluminium, einer Legierung hiervon, Kunstoff oder einer Metall-Kunststoffgranulat-Mischung besteht.

8. Verfahren zur Herstellung einer Zylinderkopfdichtung, die vor dem Einbau bereits an eine im Betriebszustand auftretende Verformung der abzudichtenden Flächen angepaßt ist, gekennzeichnet durch folgende Verfahrensschritte:
a) Experimentelles Ermitteln der Topographie des Raumes, der zwischen den Dichtflächen der abzudichtenden Bauteile ausgebildet ist, unter Berücksichtigung der Biegelinien beides abzudichtenden Flächen, die sich durch die im Betriebszustand auftretende Verformung der abzudichtenden Flächen ergeben.
b) Verrechnen der ermittelten Topographiewerte mit motorspezifischen Daten derart, daß unter verschiedenen Betriebsbedingungen die für die Abdichtung notwendige Pressungsverteilung besteht, wobei betriebs- und materialbedingte Daten der abzudichtenden Bauteile berücksichtigt werden;
c) Ausformen der Zylinderkopfdichtung entsprechend den modifizierten Topographiedaten unter Verwendung eines Werkstoffes, der im Einbauzustand unter unterschiedlichen Betriebsbedingungen druckfest und nicht dikkenverformbar ist, so daß die Zylinderkopfdichtung zumindest einseitig und zumindest an jeder im Einsatzfall tragenden Stelle vor dem Einbau eine zur Durchbiegung der abzudichtenden Flächen komplementäre, dreidimensionale, sprungfreie Dichtfläche aufweist.

9. Verfahren nach Anspruch 8, dadurch gekennzeichnet, daß das experimentelle Ermitteln durch Herstellen auf experimentelle Art eines Einbaumusters in der Weise erfolgt, daß ein plastisch verformbarer Werkstoff zwischen die abzudichtenden Flächen, gegebenenfalls unter Betriebsbedingungen eingespannt wird.

10. Verfahren nach Anspruch 9,
dadurch **gekennzeichnet,**
daß das Ausformen der Zylinderkopfdichtung unter Zuhilfenahme von Computer Aided Design stattfindet.

11. Verfahren nach einem der Ansprüche 9 oder 10,
dadurch **gekennzeichnet,**
daß mehrere Einbaumuster unter unterschiedlichen Betriebszuständen der abzudichtenden Flächen hergestellt, ausgewertet und die ermittelten Meßdaten zum Erstellen einer Topographie miteinander verrechnet werden, um diese an die unterschiedlichen Betriebszustände anzupassen.

12. Verfahren nach einem der Ansprüche 9 bis 11,
dadurch **gekennzeichnet**,
daß das Ermitteln der Topographie durch Abtasten des Einbaumusters mit einem Dickenmeßgerät und Abspeichern der Meßdaten in einer Datenverarbeitungseinrichtung, stattfindet.

13. Verfahren nach Anspruch 10 oder nach Anspruch 10 in Kombination mit einem der Ansprüche 11 und 12,
dadurch **gekennzeichnet,**
daß das Ausformen mittels eines Prägewerkzeugs mit einer CAD-erstellten Negativform der Zylinderkopfdichtung stattfindet.

14. Verfahren nach einem der Ansprüche 12 oder 13,
dadurch **gekennzeichnet,**
daß das Abtasten des Einbaumusters im Bereich der Brennraumöffnungen (11,12) in radialer Richtung und/oder außerhalb des Bereichs der Brennraumöffnungen (11,12) kartesisch erfolgt.

## Claims

1. Cylinder head gasket, in which prior to assembly at least on one side and at least at each bearing area (15) in the use case, a three-dimensional, continous sealing surface complimentary to the topography of the space between the surfaces to be sealed is permanently shaped so that the sealing surface is formed one-pieced in a sealing plate (11) and is of a material having a higher compression modulus than the maximum specific loading occuring in operation so that in the assembly state the gasket is pressure-resistant and is not thickness-deformable and in which the thickness distribution of the three-dimensional sealing surface is purposefully shaped so that under operating conditions over the complete sealing surface the surface pressing is equal for each one medium to be sealed, so that a purposeful distribution of screw forces on the sealing surface under operation is achieved.

2. Cylinder head gasket according to claim 1,
**characterized** in that
the thickness distribution of the three-dimensional sealing surfaces for different mediums, e. g. combustion gases and water, are formed so that individual surface pressures are obtained in the respective operation case.

3. Cylinder head gasket according to claim 1 or 2,
**characterized** in that
it has a continous thickness distribution.

4. Cylinder head gasket according to one of the preceding claims,
**characterized** in that
the non-bearing surface areas (16) are lowered compared with the bearing areas (15).

5. Cylinder head gasket according to one of the preceding claims,
**characterized** in that
the three-dimensional sealing surface within the bearing areas (15) is at least partly provided with a layer pressure-deformable in the micro-range.

6. Cylinder head gasket according to claim 5,
**characterized** in that
the facing sealing surfaces are unequal.

7. Cylinder head gasket according to one of the preceding claims,
**characterized** in that
it is made from steel, aluminium, an alloy thereof, plastic or a metal-plastic granule mixture.

8. Process for producing a cylinder head gasket, adapted to a deflection of the sealing surfaces occuring in the operating state prior to assembly,
**characterized** by the following process steps:
a) Experimental determination of the topography of the space, formed between the sealing surfaces of the members to be sealed, under consideration of the bending lines of both of the surfaces to be sealed, produced by the occuring deflection of the surfaces to be sealed during the operating state.
b) Calculation of the determined topography values with engine-specific data so that the pressure distribution necessary for the sealing under different operating conditions is maintained, considering process- and material-dependent data of the members to be sealed.
c) Shaping of the cylinder head gasket considering the modified topography data under usage of a material, which is pressure-resistant and not thickness-deformable under different operating conditions in the installed state so that the cylinder head gasket comprises prior to assembly at least on one side and at least at each bearing point in the use case, a three-dimensional, continous sealing surface complementary to the deflection of the surfaces to be sealed.

9. Process according to claim 8,
**characterized** in that
the experimental determination is made by producing an assembly pattern in an experimental way so that a plastically deformable material is secured between the surfaces to be sealed, if any under operating conditions.

10. Process according to claim 9,
**characterized** in that
the shaping of the cylinder head gasket is made with the aid of Computer Aided Design.

11. Process according to claims 9 or 10,
**characterized** in that
several assembly patterns are produced under different operating states of the surfaces to be sealed, is evaluated and the test data established are calculated together for producing a topography, so as to adapt the latter to the different operating states.

12. Process according to one of the claims 9 or 10,
**characterized** in that
the determination of the topography is made by scanning the assembly pattern with a thickness meter and storing the test data in a data processing equipment.

13. Process according to one of the claims 9 or 10 in combination with one of the claims 11 or 12,
**characterized** in that
that the shaping is made by a stamping tool with a CAD-made negative shape of the cylinder head gasket.

14. Process according to one of the claims 12 or 13,
**characterized** in that
the scanning of the assembly pattern in the vicinity of the combustion chamber openings (11,12) takes places in radial direction and/or in cartesian manner outside the area of the combustion chamber openings (11,12).

## Revendications

1. Joint de culasse dans lequel au moins sur une face et au moins dans chaque zone (15) qui est une zone porteuse en utilisation, on forme avant le montage, par déformation permanente une surface d'étanchéité dépourvue d'échelons, tridimensionnelle, correspondant à la topographie de l'espace compris entre les surfaces étanchées, de telle manière que la surface d'étanchéité soit formée en une seule pièce avec une plaque d'étanchéité (11) et faite d'une matière dont la limite élastique est supérieure à la contrainte maximale spécifique qui peut se présenter en utilisation, de sorte qu'elle est résistante à la pression et qu'elle ne peut pas se déformer en épaisseur sous l'effet de la pression de compression à l'état monté, et dans lequel la répartition des épaisseurs de la surface d'étanchéité tridimensionnelle est conçue de telle manière que la pression par une unité de surface soit la même sur toute la surface d'étanchéité pour un milieu à isoler à joint étanche dans les conditions de service et qu'en utilisation, on obtienne une répartition rationnelle des forces de serrage des vis sur la surface d'étanchéité.

2. Joint de culasse selon la Revendication 1, ***caractérisé en ce que*** la répartition des épaisseurs des surfaces d'étanchéité tridimensionnelles pour les différents fluides, par exemple, les gaz de combustion et l'eau, est calculée de manière à établir différentes pressions par unité de surface en utilisation.

3. Joint de culasse selon la Revendication 14 ou 2, ***caractérisé en ce qu*'**il présente une distribution d'épaisseur par variation continue.

4. joint de culasse selon une des Revendications précédentes, ***caractérisé en ce que*** les régions de surfaces (16) non porteuses sont en retrait par rapport aux régions porteuses (15).

5. Joint de culasse selon une des Revendications précédentes, ***caractérisé en ce qu*'**à l'intérieur des régions porteuses (15), la surface d'étanchéité tridimensionnelle est munie au moins partiellement d'une couche pouvant se déformer en compression dans une micro-région.

6. Joint de culasse selon la Revendications 5, ***caractérisé*** ***en ce que*** les surfaces d'étanchéité opposées sont inégales.

7. Joint de culasse selon une des Revendications précédentes, ***caractérisé en ce qu****'*il est composé d'acier, d'aluminium, d'un alliage de ces métaux, d'une matière plastique ou d'un mélange de métal et de granulés de matière plastique.

8. Procédé de fabrication d'un joint de culasse qui, dès avant le montage, est déjà adapté à une déformation des surfaces à étancher qui se produira dans l'état de fonctionnement, caractérisé par les phases de procédé suivantes :
a) détermination expérimentale de la topographie de l'espace qui est formé entre les surfaces d'étanchéité des éléments à étancher, introduction des lignes de flexion des deux surfaces à étancher, qui résultent de la déformation des surfaces à étancher qui se produit dans l'état de fonctionnement
b) correction des valeurs topographiques calculées par intervention des données spécifiques aux moteurs, de manière à obtenir la répartition de pression nécessaire pour assurer l'étanchéité, dans différentes conditions de travail, en faisant ainsi intervenir les données de fonctionnement et de la nature de la matière des pièces à étancher,
c) déformer le joint de culasse en fonction des données topographiques modifiées, en utilisant une matière qui, à l'état monté, est résistante à la pression et indéformable en épaisseur dans différentes conditions de fonctionnement, de sorte qu'avant le montage le joint de culasse présente, du moins sur une face et du moins dans chaque zone qui est porteuse en utilisation, une surface d'étanchéité tridimensionnelle, dépourvue d'échelons, complémentaire de la flèche des surfaces à étancher.

9. Procédé selon la Revendication 8, ***caractérisé en ce que*** la recherche expérimentale s'effectue en préparant de façon expérimentale un modèle de montage en serrant une matière susceptible de déformation plastique entre les surfaces à étancher, éventuellement dans les conditions de fonctionnement.

10. Procédé selon la Revendication 9, ***caractérisé en ce que*** la déformation du joint de culasse s'effectue avec assistance d'une conception assistée par ordinateur.

11. Procédé selon une des Revendications 9 ou 10, ***ca***r***actérisé en ce qu***'on prépare plusieurs exemplaires de modèles de montage dans différents états de fonctionnement des surfaces à étancher, qu'on les évalue et qu'on fait interagir entre elles les données de mesures obtenues pour établir une topographie, afin d'adapter cette topographie aux différents états de fonctionnement.

12. Procédé selon une des Revendications 9 à 11, ***caractérisé en ce que*** la détermination de la topographie s'effectue par palpage du modèle de montage à l'aide d'un appareil de mesure de l'épaisseur, et par mémorisation des données de mesure dans un appareil de traitement des données.

13. Procédé selon la Revendication 9 ou la Revendication 10, en combinaison avec une des revendications 11 et 12, ***caractérisé en ce que*** la déformation s'effectue au moyen d'un outil d'estampage ayant la forme en creux du joint de culasse, qui a été déterminée par un procédé de conception assistée par ordinateur.

14. Procédé selon une des Revendications 12 et 13, ***caractérisé en ce que*** le palpage du modèle de montage s'effectue dans une direction radiale dans la région des ouvertures (11, 12) des chambres de combustion et/ou en coordonnées cartésiennes en dehors de la région des ouvertures (11, 12) des chambres de combustion.
